# EUROPEAN PATENT APPLICATION

(11) **EP 2 098 825 A2**
(43) Date of publication of application: **09.09.2009**
(21) Application number: 09152815.8
(22) Date of filing: 13.02.2009
(51) Int. Cl.: G01C 21/36

(54) **Destination search support device and destination search support program**

(30) Priority: 06.03.2008 JP 2008056645
(71) Applicant: Aisin AW Co., Ltd., Fujii-cho Anjo-shi, Aichi 444-1192 (JP)
(72) Inventor: Kawauchi, Hiroshi, Okazaki-shi Aichi 444-8564 (JP)
(74) Representative: TBK-Patent

(57) **Abstract**

A navigation device, in a case where a destination candidate is deleted, postpones the deletion by providing a deletion deadline for the destination candidate. This makes it possible to search for the destination candidate even if it is eligible for deletion. If a user sets as the destination a destination candidate whose deletion has been postponed, the destination candidate is displayed differently to make the user aware that the deletion has been postponed. If a destination candidate for which the deletion deadline has been set is set as the destination, the navigation device compares the deletion deadline to a date that is m months after the current date, and if the m months later date is later than the deletion deadline, the navigation device extends the deletion deadline by updating it to the m months later date. This postpones the deletion of a destination candidate that the user considers necessary.

## Description

The present invention relates to a destination search support device and a destination search support program for setting a destination in a navigation device, for example.

In recent years, the guidance of vehicles by navigation devices has become increasingly common.
A navigation device has a function that searches for a route from a departure point to a destination, a function that detects the vehicle's position using the Global Positioning System (GPS) satellites and a sensor such as a gyroscope or the like, a function that displays the vehicle's current position and the route to the destination on map, and the like.

Generally, in cases where the navigation device is used to search for a route, to search for a facility in the vicinity of the current position and to check information on the facility, and the like, a destination is input. The input of the destination is done by searching a destination data file to find destination candidates that correspond to characters that are input and displaying the destination candidates. The input of the destination is completed by selecting one of the displayed destination candidates.

Incidentally, map information must be updated due to changes in the facilities at the destination, such as the removal of a facility, a change of name, and the like.
In Japanese Patent Application Publication No. JP-A-H08-305282, a map information update method and a route guidance system for a mobile unit are described as a technology for performing this sort of map update. The technology efficiently updates the vehicle's maps by transmitting the update changes for the map information from a center to the vehicle.

Furthermore, with the development of the naming rights business in recent years, there are cases where the name of a facility is changed only for a fixed period of time.
The naming rights business is a business model for obtaining compensation in exchange for granting the naming rights to a facility to a third party for a fixed period of time.
For example, the naming rights to a stadium called Minato-Ku Stadium may be leased to a company called Nekusuto Amusement Corporation for a fixed period of time, and Nekusuto Amusement Corporation may rename Minato-Ku Stadium to Nekusuto Stadium for that fixed period.
In unpublished Japanese Patent Application 2007-159078, the present applicant describes a navigation device and navigation program as a technology for use in a case where a facility name is changed for a fixed period of time.
The technology sets an effective period for the facility name and changes the name of the facility in accordance with the effective period.

In recent years, the names of facilities have been changed frequently due to the elimination and consolidation of businesses, the naming rights business, and the like, but known navigation devices, when they change the name of a facility or the like, delete from the map information the old name that was used before the change.

However, the user does not necessarily know the most recent name, and in some cases, a search is performed using the old name. This creates a problem in that, if the old name has been deleted, the facility cannot be found by the search.
There are also cases where, even if a facility is closed, a concerned party or the like may use a navigation device for a fixed period of time to visit the facility. In a case where only the name has changed, and everything else about the facility remains the same, the inability to find the facility using the old name may cause the user to wrongly believe that the facility is closed.

Accordingly, it is an object of the present invention to provide the capacity to perform a flexible search with regard to variations in a facility's name and the like.
This object is solved by a destination search support device as set out in claim 1, or by a destination search support program as set out in claim 6, or further alternatively by a destination search support method as set out in claim 7.
Advantageous developments are set out in the dependent claims.

(1) According to the present invention as described in a first and a sixth aspects, an expiration date is assigned to the destination candidate, and after the expiration date has passed, the destination candidate is deleted. In the case of a destination candidate that is set as the destination within a fixed period before the search expiration date, the search expiration date can be extended, such that a necessary destination candidate will not be deleted.
(2) According to the present invention as described in a second aspect, the destination candidates for which the search expiration dates have passed are identified and deleted, making it possible to utilize a storage area effectively.
(3) According to the present invention as described in a third aspect, the destination candidates can be grouped, and their search expiration dates can be extended in group units.
(4) According to the present invention as described in a fourth aspect, the destination candidates for which the search expiration dates have not been set can be distinguished from the destination candidates for which the search expiration dates have not yet passed.
(5) According to the present invention as described in a fifth aspect, in a case where one of the destination candidates for which the search expiration date has passed is set as the destination, a warning can be provided to the effect that the search expiration date for the destination candidate has passed and the destination candidate is eligible for deletion.

In the following, the drawings are briefly described:
FIG. 1 is a system configuration diagram of a navigation device;
FIG. 2 is a figure that shows an example of a logical configuration of a destination data file;
FIG. 3 shows conceptual diagrams for explaining a method of extending a deletion deadline for a destination candidate;
FIG. 4 shows figures for explaining a candidate display screen; and
FIG. 5 is a flowchart for explaining a procedure that extends the deletion deadline for the destination candidate.

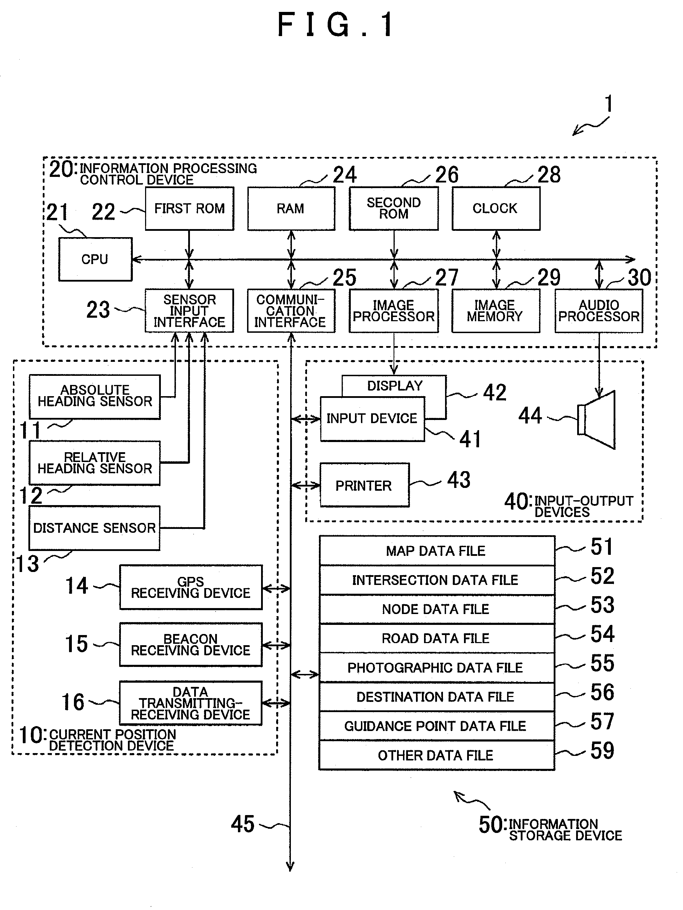

(1) Overview of an embodiment
In a case where a destination candidate will be deleted due to a change of name for a facility, a removal or closure of a facility, or the like, a navigation device 1 (FIG. 1) provides a deletion deadline for the destination candidate and postpones the deletion. This makes it possible to search for a destination candidate even if it is eligible for deletion.
In a case where a user sets as a destination a destination candidate for which the deletion has been postponed, the navigation device 1 makes the user aware that the deletion of the destination candidate has been postponed by changing the way that the destination candidate is displayed or the like.

In a case where a destination candidate for which the deletion deadline has been set is set as the destination, the navigation device 1 compares the deletion deadline to a date that is m months after the current date. If the date that is m months after the current date is later than the deletion deadline, the navigation device 1 updates the deletion deadline for the destination candidate to the date that is m months after the current date, thus extending the deletion deadline. This postpones the deletion of a destination candidate that the user deems to be necessary.
This procedure makes it possible for the navigation device 1 to delete the destination candidate (facility) after retaining it for a fixed period of time. Moreover, while the destination candidate is being retained for the fixed period of time, it can be found by searches and displayed in lists, but the navigation device 1 makes the user aware that the destination candidate is eligible for deletion by changing the way that the destination candidate is displayed or the like.

(2) Details of the embodiment
FIG. 1 is a system configuration diagram of the navigation device 1 in which the destination input device and the destination input program according to the present embodiment are used.
The navigation device 1 is installed in a vehicle and, as shown in FIG. 1, includes a current position detection device 10, an information processing control device 20, input-output devices 40, and an information storage device 50.
A configuration of the current position detection device 10, which functions as a current position acquisition unit, will be explained first. An absolute heading sensor 11 is a geomagnetic sensor that detects the direction in which the vehicle is facing, by using a magnet to detect the direction north, for example. The absolute heading sensor 11 may be any unit that detects an absolute heading.

A relative heading sensor 12 is a sensor that detects, for example, whether or not
the vehicle has turned at an intersection. It may be an optical rotation sensor that is attached to a rotating portion of the steering wheel, a rotating type of resistance volume, or an angle sensor that is attached to a wheel portion of the vehicle.
A gyroscopic sensor that utilizes angular velocity to detect a change in an angle
may also be used. In other words, the relative heading sensor 12 may be any unit that can detect an angle that changes in relation to a reference angle (the absolute heading).
A distance sensor 13 may be, for example, a unit that detects and measures a rotation of a wheel or a unit that detects an acceleration and derives its second integral. In other words, the distance sensor 13 may be any unit that can measure a distance that the vehicle moves.

A GPS receiving device 14 is a device that receives a signal from a man-made satellite. It can acquire various types of information, such as a signal transmission time, information on the position of the receiving device 14, a movement velocity of the receiving device 14, a direction of movement of the receiving device 14, and the like.
A beacon receiving device 15 is a device that receives a signal that is transmitted from a transmission device that is installed at a specific location. Specifically, the beacon receiving device 15 can obtain information that pertains to the vehicle's operation, such as VICS (Vehicle Information and Communication System) information, information on traffic congestion, information on the vehicle's current position, parking information, and the like.

A data transmitting-receiving device 16 is a device that utilizes a telephone circuit or radio waves to perform communication and exchange information with other devices outside the vehicle.
For example, a data transmitting-receiving device 16 may be used in a variety of ways, such as for a car telephone, ATIS (Advanced Traveller Information System), VICS, GPS route correction, inter-vehicle communication, and the like, and is capable of inputting and outputting information that relates to the operation of the vehicle.

The information processing control device 20 performs calculations and control based on information that is input from the current position detection device 10 and the input-output devices 40, as well as on information that is stored in the information storage device 50. The information processing control device 20 is also a unit that performs control such that calculation results are output to an output unit such as a display 42, a printer 43, a speaker 44, or the like.

The configuration of the information processing control device 20 is described below.
A central processing unit (CPU) 21 performs overall calculations and control for the entire navigation device 1.
A first ROM 22 stores programs that are related to navigation, specifically, in the present embodiment, navigation programs that are related to a process of inputting the destination by inputting the name before it was changed or the name after it was changed, to current position detection, to route searching, to displayed guidance, and the like.
A sensor input interface 23 is a unit that receives information from the current position detection device 10.

A RAM 24 stores information that a user inputs, such as an input from an input device 41 that is described later, as well as destination information, information on a point that the vehicle passes, and the like. The RAM 24 is also a storage unit for storing the results of calculations that the CPU 21 makes based on the information that is input by the user, route search results, and map information that is read in from the information storage device 50.
Furthermore, in the destination input process according to the present embodiment, the destination names and the like are stored as destination candidates in the RAM 24.
A communication interface 25 is a unit that inputs and outputs information from the current position detection device 10, particularly information that is acquired from outside the vehicle.

A second ROM 26 stores programs that are related to navigation, specifically a navigation program that is related to voice guidance.
An image processor 27 is a processing unit that takes vector information that is processed by the CPU 21 and processes it into image information. A clock 28 keeps time.
An image memory 29 is a unit that stores the image information that the image processor 27 processes.
An audio processor 30 processes audio information that is read in from the information storage device 50 and outputs it to the speaker 44.

The input-output devices 40 include the input device 41, the display 42, the printer 43, and the speaker 44. The user uses the input device 41 to input data such as a destination, a point that the vehicle passes, a search condition, and the like. The display 42 displays an image. The printer 43 prints information. The speaker 44 outputs the audio information. The input device 41 may be a touch panel that is provided on the face of the display 42, a touch switch, a joystick, a key switch, or the like.
A map of the area around the current position, various types of operation screens, and a driving route to the destination are displayed on the display 42.
Also displayed on the display 42 are operation screens, such as a character input screen for inputting the search characters that are used in the destination input process according to the present embodiment, a candidate display screen that displays a list of search candidates (destination candidates), and the like. Touching a position that corresponds to an item or the like that is displayed on an operation screen causes the item in the touched position to be input from the touch panel that is provided on the screen of the display 42.

The information storage device 50 is connected to the information processing control device 20 through a transmission line 45.
The information storage device 50 stores a map data file 51, an intersection data file 52, a node data file 53, a road data file 54, a photographic data file 55, a destination data file 56, a guidance point data file 57, and an other data file 59.
The information storage device 50 is generally configured from an optical storage medium such as a DVD-ROM or a CD-ROM, or from a magnetic storage medium such as a hard disk or the like, but it may also be configured from any one of various types of storage media, such as a magneto optical disk, a semiconductor memory, or the like.

The map data file 51 stores map data such as a national road map, road maps of various regions, residential maps, and the like. The road maps include various types of roads, such as main arterial roads, expressways, secondary roads, and the like, as well as terrestrial landmarks (facilities and the like). The residential maps include graphics that show the shapes of terrestrial structures and the like, as well as street maps that indicate street names and the like. The secondary roads are comparatively narrow roads with rights of way that are narrower than the prescribed values for national routes and prefectural routes. They include roads for which traffic restriction information is not added, such as "one-way" and the like.

The intersection data file 52 stores data that is related to intersections, such as geographical coordinates for the locations of intersections, intersection names, and the like. The node data file 53 stores geographical coordinate data and the like for each node that is used for route searching on the map. The road data file 54 stores data that is related to roads, such as the locations of roads, the types of roads, the number of lanes, the connection relationships between individual roads, and the like. The photographic data file 55 stores image data of photographs taken of locations that require visual display, such as various types of facilities, tourist areas, major intersections, and the like. The guidance point data file 57 stores guidance data on geographical points where guidance is required, such as the content of a guidance display sign that is installed on a road, guidance for a branching point, and the like.

The destination data file 56 stores the destination data on the destination candidates that are eligible for the destination searches, such as data on major tourist areas, buildings, facilities, locations such as companies, sales offices, and the like that are listed in telephone directories and that can be selected as destinations, and the like.
The destination data includes search keys (phonetic representations of names) and information on facilities. The information on the facilities includes names, coordinates, telephone numbers, additional information, and the like. The coordinates are x and y coordinates that are derived from the latitudes and longitudes of the destinations. The additional information is detailed data that is related to the destinations.

An effective period can also be set for a destination candidate. For a destination candidate for which the effective period is set, a deletion deadline is also set, indicating the date on which the effective period and the corresponding destination data will be deleted from the destination data file 56.
The deletion deadline is the last day of the period during which a search can find the destination candidate, so it also functions as a search expiration date. Thus the navigation device 1 is provided with a destination candidate storage unit that stores the destination candidate for which the search expiration date is set.

In addition, for facilities that are chain stores, the destination data includes data that links the facilities with one another and groups them, and also includes a representative name for the group.
In this manner, groups are set for some of the destination candidates.

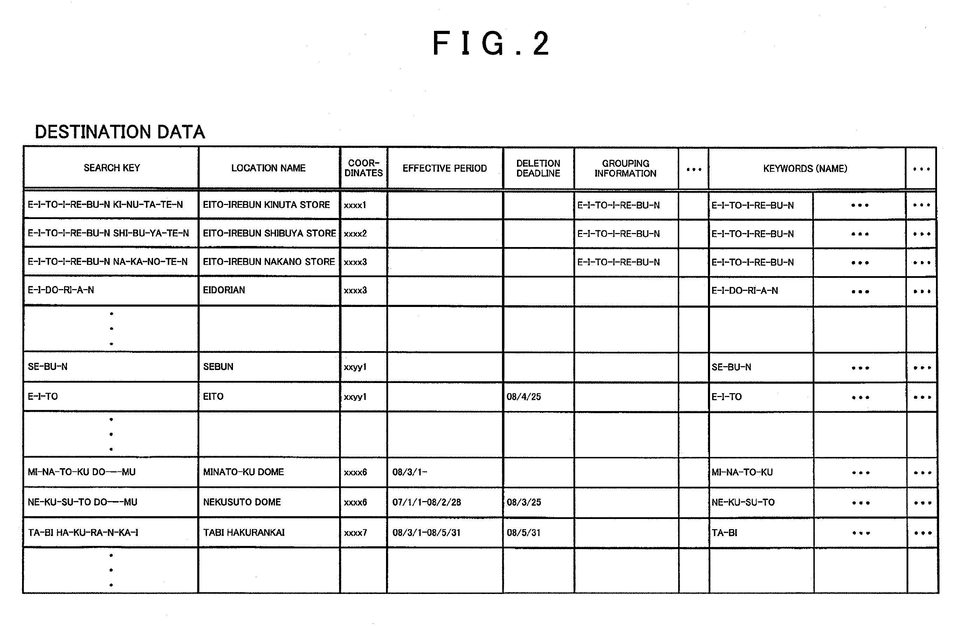

FIG. 2 is a figure that shows an example of a logical structure of the destination data file 56.
The destination data file 56 specifies each of the destination candidates in terms of a search key, a location name, coordinates, a telephone number (not shown in FIG. 2), the effective period, the deletion deadline, grouping information, keywords, and the like.

The location name is a character string that describes the destination candidate and is used in displaying the search results on the candidate display screen 60, which is described later.
The search key is the phonetic representation of the location name.
There are two methods for setting a search term in the navigation device 1. The first method is character input, where the user sets the search term by inputting characters directly. The second method is keyword input, where the user sets the search term by selecting a keyword that has been prepared in advance. In a case where the search term is input as characters, the search is conducted for a character string that corresponds to the search key.

Note that in the present embodiment, the search operates such that it finds names that start with a character string that matches the search key. However, the search may also operate such that, for example, the search term "su-pa- e-i-to" is divided into the segments "su-pa-" and "e-i-to", which are then stored in memory. Any name that matches one of the segments, such as "e-i-to", for example, is treated as a match for the search term "su---pa-- e-i-to".

The coordinates are coordinate values for the location, such as the latitude and the longitude or the like. The telephone number is the telephone number of the facility at the location.
The navigation device 1 can calculate the distance from the vehicle to the destination candidate based on the coordinates of the current position and the coordinates in the destination data.

In a case where the name of the destination candidate (the name that is stored as the location name) has been changed, the effective period specifies the period during which the name is search-eligible. For a destination candidate for which there is no limit on the effective period, the field is left blank.
The effective period is stored in the effective period field in a case where, for example, a naming rights business, a limited-duration event, or the like, has put the location name is in effect for a fixed period.
In a case where a destination candidate will become effective at a certain time in the future, the date on which it will become effective is stored in the effective period field.

For example, in FIG. 2, the destination candidates with the location names "Minato-Ku Dome" and "Nekusuto Dome" are examples of a case in which, as a result of naming rights businesses, the name of a facility is "Nekusuto Dome" from January 1, 2007 to February 28, 2008, and then becomes "Minato Dome" on March 1, 2008. Because the coordinates for the two destination candidates are the same, the navigation device 1 can recognize that they are the same facility.
For the destination candidate with the location name "Tabi Hakurankai", the effective period is from March 1 to May 31, 2008, the period during which the event takes place.
Note that in FIG. 2, the year 2008 is abbreviated to "08" in order to save space.

Note also that for a destination candidate for which the effective period has not yet begun, that is, for a destination candidate that will become effective on a certain date in the future, the navigation device 1 will treat the destination candidate as search-eligible starting on that future date.
Thus, the present embodiment is configured such that a destination candidate for which the effective period has been set is treated as search-eligible after the effective period begins, but the embodiment may also be configured such that a destination candidate for which the effective period has not yet begun is stored in a separate file and is moved to the destination data file 56 after its effective period begins.

The deletion deadline is the deadline for deleting the destination candidate from the destination data file 56.
The navigation device 1 searches through the deletion deadlines in the destination data file 56 at one of regular intervals and irregular intervals. If a destination candidate is found for which the deletion deadline has passed, the navigation device 1 deletes the destination candidate from the destination data file 56.
Thus the navigation device 1 is provided with an expired destination candidate identification unit that identifies a destination candidate for which the search expiration date (the deletion deadline) has passed. The navigation device 1 is also provided with a deletion unit that deletes from the expired destination candidate identification unit (the destination data file 56) the destination candidate for which the search expiration date (the deletion deadline) has passed.

For a destination candidate for which the effective period is set, such as Nekusuto Dome and Tabi Hakurankai above, the default value for the deletion deadline is set to the final day of the effective period.
Furthermore, in a case where the location name is changed for a business reason or the like, but the effective period is not set, the navigation device 1 sets the deletion deadline as described below.

The navigation device 1 updates the destination data file 56 to the most current state by accessing a server, for example, at one of regular intervals and irregular intervals. Where an old destination candidate is replaced by a new destination candidate (which can be recognized by checking the coordinates to confirm that the location is the same), the new destination candidate is stored in the destination data file 56, but the old destination candidate is not deleted. Instead, the deletion deadline for the old destination candidate is set to a default value that is a fixed period of time after the update date. (The period may be, for example, n months after the update date, where n is an integer, such as 2.)
Because the new destination candidate and the old destination candidate for the same location are both stored for a period of n months, the user can search for the location during this period using either the old or the new search key.

As described above, for both a destination candidate for which the effective period is set and an old destination candidate that has been replaced by a new destination candidate, the deletion deadline is set to the default value. However, the deletion deadline can be extended by updating as described below.

Specifically, if the user sets as the destination a destination candidate for which the deletion deadline is set, the navigation device 1 compares the deletion deadline to a date that is a fixed period after the date when the destination is set. (The period may be, for example, m months, where m is an integer, such as 3.) If the date at the end of the fixed period is later than the deletion deadline, the navigation device 1 updates the deletion deadline to the date that is m months after the date when the destination is set.
Thus, in a case where a destination candidate for which the deletion deadline has been set is set as the destination, the navigation device 1 extends the deletion deadline if the conditions described above are fulfilled.

In the example in FIG. 2, when the navigation device 1 adds the destination candidate with the location name "Sebun" to the destination data file 56, it recognizes that the destination candidate "Sebun" indicates the destination that was originally called "Eito", because the coordinates are the same.
Instead of deleting the destination candidate "Eito", the navigation device 1 sets the deletion deadline for "Eito" to April 25, 2008, which is n months after the update date on which the destination candidate "Sebun" was added.
Thereafter, in a case where the destination is set to "Eito", the navigation device 1 compares April 25, 2008 to the date that is m months after the date when the destination is set, and if the date that is m months after the setting date is later than April 25, 2008, the navigation device 1 updates the deletion deadline for "Eito" to the date that is m months after the setting date.

Note that the default deletion deadline for the destination candidate with the location name "Nekusuto Dome" was February 28, 2008, but it has been extended to March 25, 2008.
Note also that the destination candidate with the location name "Tabi Hakurankai" was not set as the destination within m months before May 31, 2008, which is the default deletion deadline, so the deletion deadline remains unchanged at the default value.
In the present embodiment, the deletion deadline is set to the date that is m months after the setting date, but this is merely one example, and various modified examples are possible, such as the last day of the month in which the date that is m months after the setting date falls, or the like, for example.

For a destination candidate for which the effective period is not set as described above, such as a supermarket, a convenience store, or the like, the deletion deadline is set to one of m months after the deletion deadline date and m months after the date that the user last set the destination candidate as the destination, whichever is later. For a destination candidate for which the effective period is set, such as a destination candidate that is related to an event or a naming rights business, the deletion deadline is set to one of m months after the last day of the effective period and m months after the date that the user last set the destination candidate as the destination, whichever is later.

Thus the navigation device 1 is provided with an extension unit that extends the search expiration date for the destination candidate in a case where the destination candidate is set as the destination within a specified period (in this case, m months) before the search expiration date (the deletion deadline) that is set for the destination candidate, because the deletion deadline is extended if the destination candidate is set as the destination within m months before the deletion deadline for the destination candidate.

The grouping information is information for grouping the destination candidates. It is expressed in the form of the phonetic representation of the representative name for the destination candidates. The grouping information is used to group destination candidates that are strongly related, such as chain stores and the like.
For example, the destination candidates "Eito-Irebun Kinuta Store", "Eito-Irebun Shibuya Store" and the like are grouped by the phonetic representation of the representative name "e-i-to-i-re-bu-n" in the grouping information.

The navigation device 1 sets the same effective periods and the same deletion deadlines for all of the destination candidates that are grouped into one group by the grouping information. If the deletion deadline is extended for any one of the destination candidates in the group, the navigation device 1 also extends the deletion deadlines for all of the other destination candidates that belong to the group.
For example, the same deletion deadline is set for each of the stores that are grouped under "Eito-Irebun". In a case where the deletion deadline is extended for the "Eito-Irebun Kinuta Store" within the group, the navigation device 1 extends the deletion deadlines for all of the other destination candidates that belong to the group, such as the "Eito-Irebun Shibuya Store" and the like.

In a case where the name of the store chain is changed, the extending of the deletion deadlines makes it possible to search for any of the stores in the chain by using the old name. For example, in a case where the user has moved to a new address, the user can use the old name to search for the same chain stores, whether in his new area, his former area, or elsewhere.
As described above, groups are set for some of the destination candidates, and in a case where a destination candidate for which the search expiration date is extended belongs to a group, the navigation device 1 also extends the search expiration dates for all of the destination candidates that belong to the group.

The keywords are keywords that are set for the location name. The keywords are
set for the three attributes of name, address, and genre. Note that in FIG. 2, the keywords for the name are shown, but the keywords that pertain to the address and the genre have been omitted.
The user can search for destinations by genre by selecting a genre and the associated keywords.

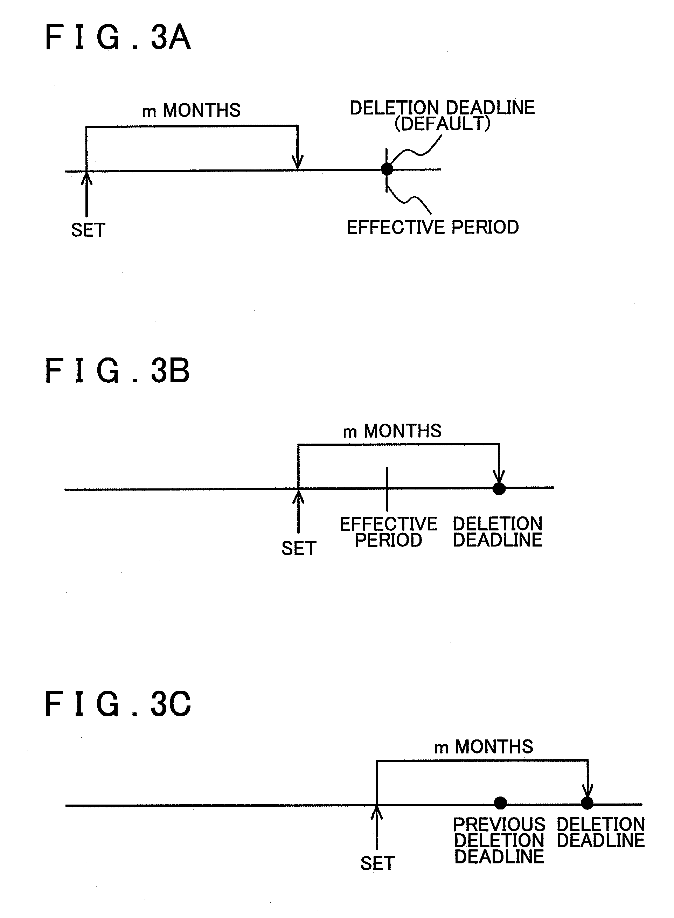

FIGS. 3A to 3C are each a conceptual diagram for explaining the method of extending the deletion deadline for a destination candidate for which the effective period is set.
As shown in FIG. 3A, the deletion deadline for the destination candidate is set by default to the last day of the effective period.
In a case where the user sets the destination candidate as the destination, and the date that is m months after the date that the destination was set falls before the deletion deadline, the deletion deadline is not extended.

On the other hand, as shown in FIG. 3B, in a case where the user sets the destination candidate as the destination, and the date that is m months after the date that the destination was set falls after the deletion deadline, the navigation device 1 extends the deletion deadline to the date that is m months after the destination setting date.

Finally, as shown in FIG. 3C, in a case where the user sets the destination candidate as the destination, if the date that is m months after the setting date falls after the extended deletion deadline, the navigation device 1 extends the deletion deadline to the date that is m months after the setting date.
In this manner, when the destination candidate is set as the destination, the navigation device 1 extends the deletion deadline for the destination candidate in units of m months.

The explanation above applies to the case of a destination candidate for which the effective period is set, but for a destination candidate for which the deletion deadline is set without the effective period being set, the navigation device 1 performs processing like that shown in FIG. 3C.
That is, for a destination candidate for which the effective period is set, the navigation device 1 takes the date that is m months after the setting date and compares it to the last day of the effective period (the default value for the deletion deadline). In a case where the deletion deadline has already been extended, the date that is m months after the setting date is compared to the extended deletion deadline.
For a destination candidate for which the effective period is not set, the navigation device 1 takes the date that is m months after the setting date and compares it to the deletion deadline.

In both cases, the navigation device 1 compares the deletion deadline and the date that is m months after the setting date, and if the date that is m months after the setting date is later than the deletion deadline, the navigation device 1 extends the deletion deadline.
In other words, if the destination candidate is set as the destination within m months before the deletion deadline, the navigation device 1 extends the deletion deadline for the destination candidate.
In this manner, the navigation device 1, under a specified condition, takes a destination candidate that the user is using and makes it search-eligible instead of deleting it, even though it is eligible for deletion.

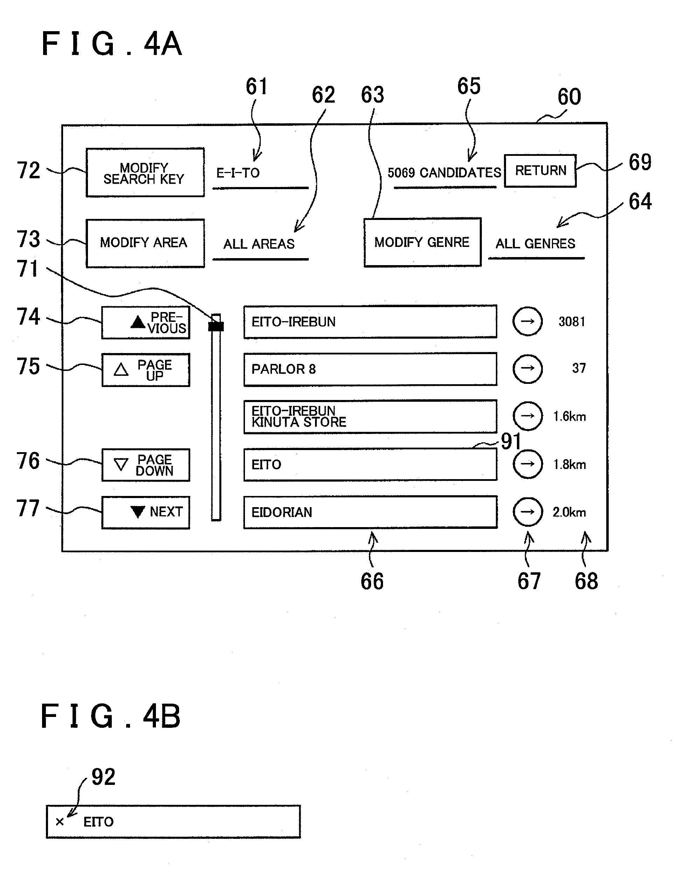

FIG. 4 shows the candidate display screen 60.
As shown in FIG. 4, a search key space 61, an area input space 62, a Modify Genre button 63, a genre input space 64, a total number of candidates space 65, search results display spaces 66, detail display buttons 67, comment spaces 68, a Return button 69, a scroll bar 71, a Modify Search Key button 72, a Modify Area button 73, a Previous button 74, a Page Up button 75, a Page Down button 76, and a Next button 77 are displayed on the candidate display screen 60.

The search key space 61 is a space that displays the search key for which the search is performed. The input characters that were input on the character input screen, which is not shown in the drawings, are displayed as the search key in the search key space 61.
The Modify Search Key button 72 is a button that is touched in order to modify the characters that are displayed in the search key space 61. When the Modify Search Key button 72 is touched, the display returns to the character input screen, and it becomes possible to modify the characters that are displayed in the search key space 61.
Thus the navigation device 1 is provided with a search term input device that inputs the search term (the search key).

The area input space 62 is a space for setting a search area within which the search for the destination data will be performed. For example, the area may be set to "All areas" to define the entire country as the search area, and the area may also be set to a smaller area, such as "Osaka Prefecture", Aichi Prefecture", "Tokyo Metropolitan", or the like.
A search area setting menu is provided as a part of the destination input process, although it is not shown in the drawings. The user can therefore select the desired search area.
The navigation device 1 uses the destination data for the area that is set in the area input space 62 and narrows down the destination candidates in the area according to the search key.
The Modify Area button 73 is a button that is touched in order to modify the search area that is set in the area input space 62. When the Modify Area button 73 is touched, it becomes possible to modify the search area that is set in the area input space 62. After the search area is modified, a search of the modified area is performed using the search key that is displayed in the search key space 61.

The genre input space 64 is a space for setting a genre within which the search for the destination data will be performed. For example, the genre may be set to "all genres", "leisure", "restaurants", "hotels", or the like.
A genre setting menu is provided as a part of the destination input process, although it is not shown in the drawings. The user can therefore select the desired genre.
The navigation device 1 uses the destination data for the genre that is set in the genre input space 64 and narrows down the destination candidates in the genre according to the search key.

The Modify Genre button 63 is a button that is touched in order to modify the genre that is set in the genre input space 64. When the Modify Genre button 63 is touched, it becomes possible to modify the genre that is set in the genre input space 64. After the genre is modified, a search of the modified genre is performed using the search key that is displayed in the search key space 61.
By using the search area and the genre as described above to narrow down the destination data that is the object of the search, the navigation device 1 reduces the amount of the search processing.

The total number of candidates space 65 displays the total number of the
destination candidates that have been selected. The total number of the destination candidates is the sum of the number of the destination candidates that were selected by the ordinary search and the number of the destination candidates that were selected by the fuzzy search. Note that the numbers of the destination candidates that were selected by each of the searches may also be displayed separately.

The search results display spaces 66 are spaces for displaying in list form the names of the destination candidates that are found by the search.
Thus the navigation device 1 is provided with a search unit that uses the search term that is input to search for the destination candidates in the destination candidate storage unit (the destination data file 56). The navigation device 1 is also provided with a destination candidate display unit that displays the destination candidates that are found.
The methods for displaying the destination candidates in the search results display spaces 66 include an ordinary display and an extended display.
The ordinary display displays the destination candidate in an ordinary form and is used to display a destination candidate for which the deletion deadline is not set, as well as a destination candidate for which the deletion deadline is set, but for which the default deletion deadline has not passed.

By contrast, the extended display is used to display a destination candidate for which the default deletion deadline has passed. It displays the destination candidate in a form that is different from the ordinary display, such as by dimming the display, for example.
In the example in FIG. 4A, the destination candidate "Eito" is displayed more dimly than the other destination candidates. This makes it possible for the user to know that, due to a name change or the like, the destination candidate "Eito" would normally be deleted.
This makes it possible for the navigation device 1 to display a destination candidate for which the search expiration date has not yet been reached in a form that is different from the form that is used to display a destination candidate for which the search expiration date has not been set.

Furthermore, the navigation device 1 can be configured to use the extended display, such as by adding to the destination candidate an additional display like a removal mark 92 or the like, for example, as shown in FIG. 4B.
The navigation device 1 can also be configured such that it makes the user aware that a destination candidate is eligible for deletion by providing a warning when the user sets the destination candidate as the destination and requiring the user to take a particular action in order to make the setting, such as pressing and holding a button or the like, or pressing a button twice, or the like.
Thus the navigation device 1 is provided with a search expiration date passed notification unit that, in a case where a destination candidate for which the search expiration date has passed is set as the destination, provides a notification that the search expiration date for the destination candidate has passed.

If a destination candidate that is displayed in the search results display spaces 66 as described above is selected (touched), the navigation device 1 sets the touched destination candidate as the destination for which guidance is provided.
Thus the navigation device 1 is provided with a setting unit that sets as the destination a destination candidate that has been found by the search.

Returning to FIG. 4A, one of the detail display buttons 67 is displayed for each of the destination candidates. When the user touches the detail display button 67 for the desired destination candidate, the navigation device 1 searches the destination data file 56 for the facilities information that is associated with the selected destination candidate and displays the facilities information on the display 42.
In a case where the destination candidate is a display of a representative name for destination candidates that are grouped by the grouping information, the comment space 68 displays the number of the destination candidates that belong to the group. In a case where the destination candidate is displayed individually, the comment space 68 displays the distance from the current position to the destination candidate.
Thus the navigation device 1 has a function that takes the destination candidates
that are grouped by the grouping information and displays them under the representative name.
The Return button 69 is a button for returning to the character input screen, which is the previous screen to the candidate display screen 60.

The Previous button 74 and the Next button 77 are buttons for respectively
scrolling up and scrolling down within the search results display spaces 66, one display at a time.
The Page Up button 75 and the Page Down button 76 are buttons for respectively scrolling up and scrolling down within the search results display spaces 66, one page at a time.

The scroll bar 71 indicates the position of the currently displayed destination candidates among all of the destination candidates. Scrolling up and scrolling down can be done by touching and dragging the scroll bar 71.

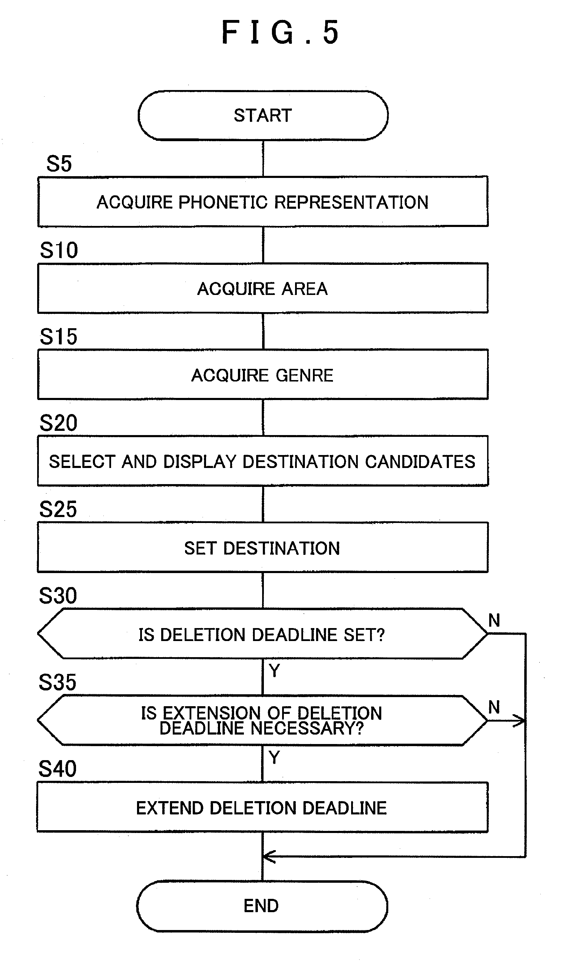

Next, a procedure by which the navigation device 1 extends the deletion deadline of the destination candidate will be explained using a flowchart in FIG. 5.
The processing that is described below is performed by the CPU 21 of the navigation device 1 in accordance with a specified program.
First, the navigation device 1 acquires the phonetic representation in the search key space 61 on the candidate display screen 60 (FIG. 4A) (step 5), acquires an area that is input in the area input space 62 (step 10), and acquires a genre that is input in the genre input space 64 (step 15).
Next, the navigation device 1 uses the acquired information to select the destination candidates from the destination data file 56 and display them in the search results display spaces 66 (step 20).

If the user touches any one of the destination candidates that are displayed in the search results display spaces 66, the navigation device 1 sets the touched destination candidate as the destination (step 25).
When the destination is set in this manner, the navigation device 1 determines whether or not the deletion deadline is set in the destination data file 56 for the destination candidate that is set as the destination (step 30).

In a case where it is determined that the deletion deadline is not set for the destination candidate (NO at step 30), the navigation device 1 ends the processing.
On the other hand, in a case where it is determined that the deletion deadline is set for the destination candidate (YES at step 30), the navigation device 1 determines whether or not it is necessary to extend the deletion deadline (step 35).

The navigation device 1 makes this determination as described below.
The navigation device 1 calculates the date that is m months after the current date, then compares that date to the deletion deadline. In a case where the date that is m months after the current date is later than the deletion deadline, the navigation device 1 determines that it is necessary to extend the deletion deadline, and in a case where the date that is m months after the current date is not later than the deletion deadline, the navigation device 1 determines that it is not necessary to extend the deletion deadline (step 35).

In a case where the navigation device 1 determines that it is not necessary to extend the deletion deadline (NO at step 35), the navigation device 1 ends the processing without extending the deletion deadline.
On the other hand, in a case where the navigation device 1 determines that it is necessary to extend the deletion deadline (YES at step 35), the navigation device 1 extends the deletion deadline for the destination candidate by updating the deletion deadline in the destination data file 56 to the date that is m months after the current date (step 40), then ends the processing.

The present embodiment that is described above can provide the effects described below.
(1) In a case where the destination data in the destination data file 56 is updated, the destination data that pertains to an old destination candidate can be retained in the file for a fixed period of time, without being deleted, by setting the deletion deadline.
(2) Because both the new and old sets of the destination data are stored up until the deletion deadline, it is possible to use either one of the data sets to search for the destination candidate.
(3) Setting the deletion deadlines for the destination candidates makes it possible to delete from the destination data file 56 a destination candidate that is no longer needed.
(4) In a case where a destination candidate for which the deletion deadline has been set is set as the destination, the deletion deadline can be extended under a specified condition.
(5) Extending the deletion deadline for a destination candidate on the condition that the destination candidate is set as the destination makes it possible to retain a destination candidate that the user deems to be necessary and to delete a destination candidate that the user deems to be unnecessary.
(6) Taking a destination candidate for which the deletion deadline has been extended and displaying it in a form that is different from the form in which an ordinary destination candidate is displayed makes it possible to make the user aware that the destination candidate is eligible for deletion.

As described above, a navigation device 1, in a case where a destination candidate is deleted, postpones the deletion by providing a deletion deadline for the destination candidate. This makes it possible to search for the destination candidate even if it is eligible for deletion. If a user sets as the destination a destination candidate whose deletion has been postponed, the destination candidate is displayed differently to make the user aware that the deletion has been postponed. If a destination candidate for which the deletion deadline has been set is set as the destination, the navigation device compares the deletion deadline to a date that is m months after the current date, and if the m months later date is later than the deletion deadline, the navigation device extends the deletion deadline by updating it to the m months later date. This postpones the deletion of a destination candidate that the user considers necessary.

## Claims

1. A destination search support device, comprising:
a destination candidate storage unit (56) that is adapted to store destination candidates for which search expiration dates are set;
a search term input unit (41) for inputting a search term;
a search unit that is adapted to use the search term that is input to search for the destination candidates in the destination candidate storage unit;
a setting unit that is adapted to set as a destination one of the destination candidates that are found by the search;
an extension unit that is adapted to extend the search expiration date for the destination candidate in a case where the setting unit sets the destination candidate as the destination within a specified period before the search expiration date that is set for the destination candidate; and
a deletion unit that is adapted to delete from the destination candidate storage unit the destination candidates for which the search expiration dates have passed.

2. The destination search support device according to claim 1, further comprising:
an expired destination candidate identification unit that is adapted to identify the destination candidates for which the search expiration dates have passed, wherein
the deletion unit is adapted to delete the identified destination candidates.

3. The destination search support device according to either one of claims 1 and 2, wherein a group is set for at least two of the destination candidates, and the extension unit is adapted to, in a case where it extends the search expiration date for one of the destination candidates that belong to the group, extend the search expiration dates for all of the destination candidates that belong to the group.

4. The destination search support device according to any one of claims 1 through 3, further comprising:
a destination candidate display unit that is adapted to display the destination candidates that are found by the search, wherein
the destination candidate display unit is adapted to display the destination candidates for which the search expiration date has not been set in a different form from the destination candidates for which the search expiration date has not yet passed.

5. The destination search support device according to any one of claims 1 through 4, further comprising:
a search expiration date passed notification unit that is adapted to, in a case where one of the destination candidates for which the search expiration date has passed is set as the destination, provide a notification that the search expiration date for the destination candidate has passed.

6. A destination search support program for a computer that includes a destination candidate storage unit that stores destination candidates for which search expiration dates are set, the destination search support program comprising software code portions causing the computer, when the program is run on the computer, to function as:
a search term input unit that inputs a search term;
a search unit that uses the search term that is input to search for the destination candidates in the destination candidate storage unit;
a setting unit that sets as a destination one of the destination candidates that are found by the search;
an extension unit that extends the search expiration date for the destination candidate in a case where the destination candidate is set as the destination within a specified period before the search expiration date that is set for the destination candidate; and
a deletion unit that deletes from the destination candidate storage unit the destination candidates for which the search expiration dates have passed.

7. A destination search support method, wherein destination candidates for which search expiration dates are set are stored in a destination candidate storage unit, the method comprising inputting a search term; using the search term that is input to search for the destination candidates in the destination candidate storage unit; setting as a destination one of the destination candidates that are found by the search; extending the search expiration date for the destination candidate in a case where the destination candidate is set as the destination within a specified period before the search expiration date that is set for the destination candidate; and deleting from the destination candidate storage unit the destination candidates for which the search expiration dates have passed.
